# EUROPEAN PATENT SPECIFICATION

(11) **EP 2 071 736 B1**
(45) Date of publication and mention of the grant of the patent: **20.04.2011**
(21) Application number: 07076088.9
(22) Date of filing: 14.12.2007
(51) Int. Cl.: H04B 7/005

(54) **Method to improve capacity in a communication network**
Verfahren zur Verbesserung der Kapazität in einem Kommunikationsnetzwerk
Procédé d'amélioration de capacité dans un réseau de communication

(43) Date of publication of application: 17.06.2009
(73) Proprietor: Vodafone Group PLC, Newbury Berkshire RG14 2FN (GB); Vodafone Espana, S.A., 28108 Alcobendas, Madrid (ES)
(72) Inventor: Domiguez Romero, Francisco Javier, 28032 Madrid (ES); Arranz Arauz, Miguel c/o Vodafone Espana, S.A., 28050 Madrid (ES); Lopez Roman, Javier c/o Vodafone Espana, S.A., 28050 Madrid (ES)
(74) Representative: Keston, David Arthur

(56) References cited:
- WO-A-03/079574
- WO-A-2005/032009
- US-A- 5 930 242

## Description

### Obiect of the invention.

The present invention relates to a method to optimize the power allocated in CPICH Channel at capacity layers (2^{nd} and 3^{rd} frequency carriers) in order to have the maximum power available in the power amplifier for dedicated channels at any time (maximize capacity).

### Field of the invention.

The present invention is specifically applicable to so-called "*third-generation*" system such as the UMTS terrestrial radio access network (UTRAN). The invention is also applicable to services like "wireless ADSL".

### Background of the invention.

Power is one of the most valuable resources in 3G technologies so telecommunication operators need efficient process that let them to manage the power in an efficient way. The most common implementation of power allocation for CPICH (Common Pilot Channel) is a static one. In those implementations is reserved a certain amount of power for one channel that can not be used for any other purpose so this implementation in capacity cells is quite inefficient because that power is needed for dedicated channels more than for common channels.

A static resources management is always more inefficient than a dynamic strategy that takes into account the cell conditions in terms of traffic load and users position. These two terms are used because the CPICH channel is the reference channel used by handset to estimate radio propagation conditions so at the end the amount of power allocated in the CPICH channel will represent a trade off between coverage and capacity.

Mobile operators need a dynamic power allocation method for CPICH channel that manage the power in the most efficient way in capacity cells with the aim to allocated as much power as possible in dedicated channel rather than in common channels. The WO2005032009 application describes a method for dynamically allocating power of a pilot channel. In this application, the CPICH modification is in the same layer. In this document it is not described the concept of multi carrier for managing user traffic. The present invention relates to a method to dynamically tune the CPICH power in capacity layers taking into account there is a coverage layer. The application is based on traffic, but the aim is to balance the traffic between different neighbouring cells through different CPICH power. In the present invention, the CPICH is dynamically adjusted in all the cells of the cluster to maximize the coverage of all the cells.

The WO03107703 application describes a cellular mobile telephone network and a procedure to optimize it. The aim of said patent is to tune the CPICH power in order to mainly achieve a coverage area and use other carriers for capacity purpose. Said application does not describe the user location or power available for dedicated channels to tune the CPICH power dynamically. This solution is static, because it proposes to use high CPICH power for coverage areas and low for capacity as the best way to use all the operators carriers mainly to roll out network phases. The present invention proposes CPICH dynamic changes based on traffic.

The W003079574 application describes a method for configuring the power output of the pilot channels in a cellular radio network. Said application shows a method to calculate optimum CPICH power of a group of cells in the same frequency, taking into account the radio electrical environment, traffic load and site location. The main difference of the present invention is that the present invention modifies dynamically the CPICH power of different carriers.

The US6188906 patent describes a method for coverage optimization of multifrequency assignment system to reach the balance of traffic between different frequencies. The present invention of CPICH capacity tends to maximize the capacity reducing the power consumed by the common channels. in the capacity layer, but there is no traffic balancing between different frequencies.

Document US 5930242 discloses a method of controlling power of a pilot signal transmitted by the base station in order to decrease or increase it according to predetermined values depending on the number of mobile stations. It also proposes a priority for disconnection of said channel depending upon a characteristic of said mobile station.

### Description of the invention.

In order to avoid the problems aforementioned, it is presented the method to improve capacity in a communication network, object of the present invention.

For 2nd or 3rd carriers, most of the available power could be devoted to capacity by reducing the CPICH (e.g. forcing near the Base Station customers to roam/handover to the 2nd carrier). In this case the customers at the coverage cell border would not be affected as CPICH would be lowered, hence interference reduced. The practical implementation of this could be either static or dynamic, taking into consideration the customers under good/bad Ec/lo conditions, Ec/lo = RSCP/RSSI (where RSCP is obtained from the Pilot Channel and stands for Receive Signal Code Power and RSSI stands for Received Signal Strength Indication), and adjusting this 2nd carrier CPICH accordingly.

The CPICH power adjustment method depends on the traffic load of the cell, if it is carrying a lot of traffic then it is needed extra power for dedicated channels and consequently it has to be necessary to reduce power in common channels, but it must be taken into account the user's position in the cell, if the user are close to the base station it is possible to reduce the pilot channel without impact in service. There is a first process that runs on the coverage layer with the aim to send users near the base stations to capacity layers and a second process in the capacity cell that manages the CPICH power periodically.

The method to improve capacity in a communication network comprises, at least:
(i) a first process that runs on the coverage layer (first frequency) sending the users that are near the base stations to capacity layers; and
(ii) a second process in the capacity cell (2^{nd} and or 3^{rd} frequencies) that manages the CPICH power periodically.

Said first process comprising:
(a) a first step of establishing if there is available power in the coverage layer process less than power limit (threshold fixed by the operator): if yes, then go to second step; if not, then go to end first process;
(b) a second step of establishing if RSCP of user is more than RSCP limit: if yes, then go to third step (it's close to the base station); if not, then go to end first process;
(c) a third step of HO (Handover) process for user from coverage layer to capacity layer, then go to end first process.

Said second process comprising:
(a) a first step of establishing if user % in good radio conditions (close to the node B) is more than threshold: if yes, then go to second step; if not, then go to third step;
(b) a second step of establishing if there is available power in the capacity layer process less than a first power limit: if yes, then go to reduce the CPICH in a step fixed by the operator; if not, then go to end the second process (enough power available for capacity channels in the power amplifier);
(c) a third step of establishing if there is available power in the capacity layer process more than a second power limit and the users are far away from the node B : if yes, then go to fourth step; if not, then go to end the second process;
(d) a fourth step of establishing if CPICH power is less than CPICH power maximum: if yes then go to increase CPICH by a step; if not, then go to end the second process because you exceed the maximum CPICH power allowed by the operator;
(e) all the thresholds are tuned by the mobile operator and the two different Power limits in the second process are used for hysteresis purposes..

The method above described will enable networks to increase its capacity in 2^{nd} and 3^{rd} carriers by adjusting the CPICH power to the real needs.

### Brief description of the drawings.

Following, it is briefly described some figures that helps to better understand the invention. The figures also describe an embodiment of the present invention, as non-limitative example:

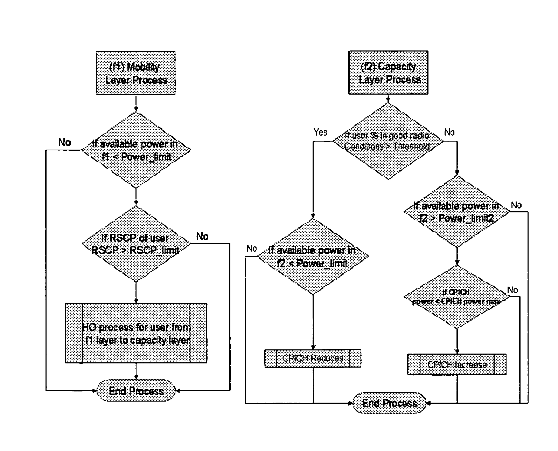

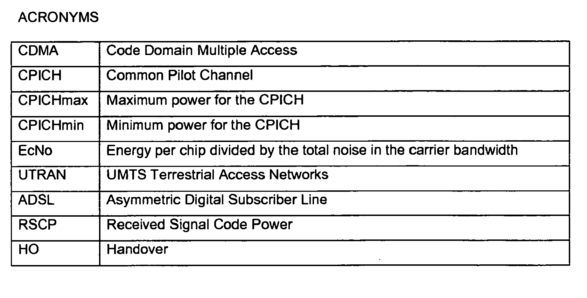

- The figure 1 shows a diagram of the method object of the present invention.

### Preferred embodiment of the invention.

Method to improve capacity in a communication network, object of the present invention, as it is shown in the figure 1. The method comprising:
(i) a first process that runs on the coverage layer sending the users that are near the base stations to the capacity layers; and
(ii) a second process in the capacity layer that managed the CPICH power periodically;

Said first process comprising:
(a) a first step of establishing if there is available power in the mobility layer process less than power limit: if yes, then go to second step; if not, then go to end first process;
(b) a second step of establishing if RSCP of user is more than RSCP limit: if yes, then go to third step; if not, then go to end first process;
(c) a third step of HO process for user from mobility layer to capacity layer, then go to end first process; and

Said second process comprising:
(a) a first step of establishing if user % in good radio conditions is more than threshold: if yes, then go to second step; if not, then go to third step;
(b) a second step of establishing if there is available power in the capacity layer process less than a first power limit: if yes, then go to reduce the CPICH; if not, then go to end the second process;
(c) a third step of establishing if there is available power in the capacity layer process more than a second power limit: if yes, then go to fourth step; if not, then go to end the second process;
(d) a fourth step of establishing if CPICH power is less than CPICH power maximum: if yes then go to increase CPICH; if not, then go to end the second process.

## Claims

1. Method to improve capacity in a communication network, comprising:
- a first process of allocating users that measures Received Signal Code Power (RSCP) of users;
- a second process of periodically managing the Common Pilot Channel (CPICH) power considering coverage and capacity;
**characterized in that**:
(i) the first process of allocating performs a handover within a cell for assigning a different carrier to a user using a first frequency carrier corresponding to a Mobility/Coverage layer to a different frequency carrier corresponding to Capacity layers in dependence upon:
- the Mobility/Coverage layer having available power and
- the RSCP of a user being over a minimum value;
(ii) the second process of periodically managing the CPICH power comprises:
- establishing available power of the Capacity layer;
- reducing the CPICH power when:
- user radio conditions being considered apt for a percentage of users exceeds a threshold and
- the Capacity layer available power is below a first limit;
- increasing CPICH power when:
- radio conditions being considered non-apt for a percentage of users is below a threshold and
- the Capacity layer available power being above a second limit and
- the Common Pilot Channel power being below a maximum.

2. Method according to claim 1, wherein the radio conditions of the user comprise Ec/lo measurements.

3. Method according to claim 1 or 2, wherein the amount of Common Pilot Channel power being reduced is set by the operator.

4. Method according to any of claims 1 to 3, wherein the first and the second power limit are set in the Capacity layer considering hysteresis.

## Patentansprüche

1. Verfahren zum Verbessern der Kapazität in einem Kommunikationsnetzwerk, das Folgendes beinhaltet:
- einen ersten Vorgang des Zuordnens von Benutzern, bei dem die Received Signal Code Power (RSCP; dt.: Empfangssignalcodeleistung) von Benutzern gemessen wird;
- einen zweiten Vorgang des periodischen Verwaltens der Common Pilot Channel (CPICH; dt.: Pilotkanal) Leistung unter Berücksichtigung von Versorgung und Kapazität;
**dadurch gekennzeichnet, dass**:
(i) der erste Zuordnungsvorgang eine Übergabe innerhalb einer Zelle zum Zuweisen eines anderen Trägers zu einem Benutzer ausführt, der einen ersten Frequenzträger benutzt, der einer Mobilität/Deckung-Schicht zu einem anderen Frequenzträger entspricht, der Kapazitätsschichten in Abhängigkeit davon entspricht:
- wobei die Mobilität/Deckung-Schicht verfügbare Leistung hat und
- die RSCP eines Benutzers über einem Mindestwert liegt;
(ii) der zweite Vorgang des periodischen Verwaltens der CPICH-Leistung Folgendes beinhaltet:
- Feststellen der verfügbaren Leistung der Kapazitätsschicht;
- Reduzieren der CPICH-Leistung, wenn:
- Benutzerfunkbedingungen, die als für einen Prozentanteil von Benutzern geeignet angesehen werden, eine Schwelle übersteigen, und
- die verfügbare Leistung der Kapazitätsschicht unter einer ersten Grenze liegt;
- Erhöhen der CPICH-Leistung, wenn:
- Funkbedingungen, die für einen Prozentanteil von Benutzern als nicht geeignet angesehen werden, unter einer Schwelle liegen, und
- die verfügbare Leistung der Kapazitätsschicht über einer zweiten Grenze liegt, und
- die Common Pilot Channel Leistung unterhalb eines Maximums liegt.

2. Verfahren nach Anspruch 1, wobei die Funkbedingungen des Benutzers Ec/lo-Messungen beinhalten.

3. Verfahren nach Anspruch 1 oder 2, wobei die Menge an reduzierter Common-Pilot Channel Leistung vom Operator eingestellt wird.

4. Verfahren nach einem der Ansprüche 1 bis 3, wobei die erste und die zweite Leistungsgrenze in der Kapazitätsschicht unter Berücksichtigung von Hysterese eingestellt werden.

## Revendications

1. Procédé d'amélioration de la capacité dans un réseau de communication, comprenant :
- un premier processus d'allocation des utilisateurs qui mesure la puissance du code de signal reçu (ou RSCP) des utilisateurs ;
- un deuxième processus consistant à gérer de façon périodique la puissance du canal commun pilote (ou CPICH) en fonction de la couverture et de la capacité ; **caractérisé en ce que** :
(i) le premier processus d'allocation effectue un transfert au sein d'une cellule afin d'allouer une différente porteuse à un utilisateur grâce à l'utilisation d'une première porteuse en fréquence correspondant à une couche Mobilité/Couverture vers une porteuse en fréquence différente correspondant à des couches Capacité, cette opération étant subordonnée aux facteurs suivants :
- la couche Mobilité/Couverture offre une disponibilité en puissance et
- la RSCP d'un utilisateur se situe au-dessus d'une valeur minimum ;
(ii) le deuxième processus consistant à gérer de façon périodique la puissance du CPICH comprend les opérations consistant à :
- établir la disponibilité en puissance de la couche Capacité ;
- réduire la puissance du CPICH dans les cas où :
- les conditions radio utilisateurs, considérées aptes pour un pourcentage d'utilisateurs, dépassent un certain seuil et
- la disponibilité en puissance de la couche Capacité se situe en dessous d'une première limite ;
- augmenter la puissance du CPICH dans les cas où :
- les conditions radio, considérées non aptes pour un pourcentage d'utilisateurs, sont inférieures à un certain seuil et
- la disponibilité en puissance de la couche Capacité se situe au-dessus d'une deuxième limite et
- la puissance du canal commun pilote se situe en dessous d'un maximum.

2. Procédé selon la revendication 1, les conditions radio de l'utilisateur englobant des mesures Ec/lo.

3. Procédé selon la revendication 1 ou 2, l'ampleur de la puissance du canal commun pilote faisant l'objet d'une réduction étant définie par l'opérateur.

4. Procédé selon l'une quelconque des revendications 1 à 3, la première et la deuxième limites de puissance étant définies dans la couche Capacité en fonction de l'hystérésis.
